# EUROPEAN PATENT APPLICATION

(11) **EP 4 686 908 A1**
(43) Date of publication of application: **04.02.2026**
(21) Application number: 25185830.4
(22) Date of filing: 27.06.2025
(51) Int. Cl.: G01B 11/22, G01B 11/24, G01M 17/02, G03B 17/56, G06T 7/586, H04N 23/56, H04N 23/60

(54) **IMAGING APPARATUS, IMAGING METHOD, AND PROGRAM**

(30) Priority: 30.07.2024 JP 2024123191
(71) Applicant: NEC Corporation, 108-8001 Tokyo (JP)
(72) Inventor: INOUE, Keiko, Tokyo, 108-8001 (JP); YACHIDA, Shoji, Tokyo, 108-8001 (JP); YAMAGUCHI, Masahiro, Tokyo, 108-8001 (JP)
(74) Representative: Betten & Resch

(57) **Abstract**

An imaging apparatus includes a mounting means for detachably mounting a device having a camera, and one or more light sources capable of switching between on and off for each of the light sources, each of the light sources capable of illuminating an imaging area of the camera.

## Description

This application is based upon and claims the benefit of priority from Japanese Patent Application No. 2024-123191, filed on July 30, 2024, the disclosure of which is incorporated herein in its entirety by reference.

### TECHNICAL FIELD

The present disclosure relates to an imaging apparatus, an imaging system, an imaging method, and a program.

### BACKGROUND ART

There is a case where a dimension of a tire portion is calculated using an image obtained by imaging the tire.

For example, in a tire groove measuring method disclosed in JP 2022-166698 A, a camera including a light projection unit and two imaging units arranged in such a way as to hold the light projection unit therebetween images a tire. In the imaging of the tire, the light projection unit projects a pattern for measurement onto the tire, and each of the two imaging units images the tire in a state where the two imaging units are arranged in the same direction as a direction in which the tire grooves extends.

Then, in this tire groove measuring method, a facing relationship between an outer surface of the tire and the camera is calculated based on the captured image, and in a case where it is determined that the outer surface of the tire and the camera face each other, a depth of the tire groove is calculated. In the calculation of the depth of the tire groove, a three-dimensional position of the outer surface of a tread portion is calculated by the principle of a stereo camera using the captured image, and the depth of the tire groove is calculated based on the calculated three-dimensional position.

### SUMMARY

In a case where it is necessary to prepare a dedicated camera for imaging the tire, such as the tire groove measuring method disclosed in JP 2022-166698 A, it is conceivable that a hardware cost becomes relatively high in terms of preparing the dedicated camera. If a camera of a general-purpose device can be used to capture an image for data processing regarding a shape of a surface of an imaging object, such as determination of the depth of the groove of the tire, it is expected that the hardware cost can be relatively reduced.

An example object of the present disclosure is to provide an imaging apparatus, an imaging system, an imaging method, and a program that can solve the above-described problems.

According to a first aspect of the present disclosure, an imaging apparatus includes a mounting means for detachably mounting a device having a camera, and one or more light sources capable of switching between on and off for each of the light sources, each of the light sources capable of illuminating an imaging area of the camera.

According to a second aspect of the present disclosure, an imaging system includes an imaging apparatus and a device having a camera, and the imaging apparatus includes a mounting means detachably mounting the device having the camera, and one or more light sources capable of switching between on and off for each of the light sources, each of the light sources capable of illuminating an imaging area of the camera.

According to a third aspect of the present disclosure, an imaging method includes causing a computer that controls an imaging apparatus including a mounting means detachably mounting a device having a camera, and one or more light sources capable of switching between on and off for each of the light sources, each of the light sources capable of illuminating an imaging area of the camera, and the device having the camera, which is mounted to the imaging apparatus, to cause the camera to capture an image in each of a plurality of lighting patterns by the one or more light sources.

According to a fourth aspect of the present disclosure, a program causes a computer that controls an imaging apparatus including a mounting means detachably mounting a device having a camera, and one or more light sources capable of switching between on and off for each of the light sources, each of the light source capable of illuminating an imaging area of the camera, and the device including the camera, which is mounted to the imaging apparatus, to cause the camera to capture an image in each of a plurality of lighting patterns by the one or more light sources.

According to one aspect of the present disclosure, a camera of a general-purpose device can be used for capturing an image for data processing regarding a shape of a surface of a capturing object.

### BRIEF DESCRIPTION OF THE DRAWINGS

Fig. 1 is a diagram illustrating an example of a configuration of an imaging apparatus according to at least one example embodiment;
Fig. 2 is a diagram illustrating an example of an appearance of an imaging system according to at least one example embodiment;
Fig. 3 is a diagram illustrating a first example of arrangement of light sources according to at least one example embodiment;
Fig. 4 is a diagram illustrating a second example of arrangement of light sources according to at least one example embodiment;
Fig. 5 is a diagram illustrating a third example of arrangement of light sources according to at least one example embodiment;
Fig. 6 is a diagram illustrating an example of setting of a mark for a user to adjust a position and an orientation of a camera according to at least one example embodiment;
Fig. 7 is a diagram illustrating another example of the configuration of the imaging apparatus according to at least one example embodiment;
Fig. 8 is a diagram illustrating an example of a processing procedure of imaging using the imaging system according to at least one example embodiment;
Fig. 9 is a diagram illustrating an example of a configuration of an imaging apparatus according to at least one example embodiment;
Fig. 10 is a diagram illustrating an example of a configuration of an imaging system according to at least one example embodiment;
Fig. 11 is a diagram illustrating an example of a procedure of processing in an imaging method according to at least one example embodiment; and
Fig. 12 is a diagram illustrating an example of a configuration of a computer according to at least one example embodiment.

### EXAMPLE EMBODIMENT

Hereinafter, example embodiments of the present invention will be described, but the following example embodiments do not limit the invention according to the claims. Not all combinations of features described in the example embodiments are essential to the solution of the invention.

### <First example embodiment>

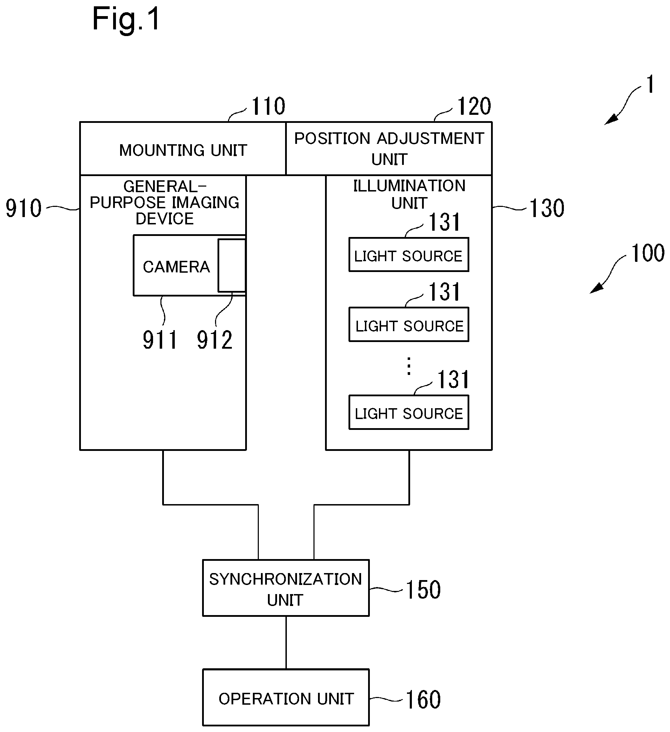

Fig. 1 is a diagram illustrating an example of a configuration of an imaging apparatus according to at least one example embodiment. In the configuration illustrated in Fig. 1, an imaging apparatus 100 includes a mounting unit 110, a position adjustment unit 120, an illumination unit 130, a synchronization unit 150, and an operation unit 160. The illumination unit 130 includes light sources 131.

Fig. 1 illustrates a general-purpose imaging device 910, a camera 911 of the general-purpose imaging device 910, and a camera lens 912 of the camera 911. The general-purpose imaging device 910 may have a configuration outside the imaging apparatus 100.

A combination of the imaging apparatus 100 and the general-purpose imaging device 910 is also referred to as an imaging system 1.

The imaging system 1 is a system that captures one or more images. In particular, the imaging system 1 images the imaging object in each of a plurality of illumination directions of light with respect to the imaging object. The contrast of the surface of the imaging object can be enhanced by applying a photometric stereo method to the image captured by the imaging system 1. As a result, it is possible to determine the presence or absence of a defect such as a scratch or a wrinkle on the surface of the imaging object and calculate the shape of the imaging object with relatively high accuracy.

Hereinafter, a case where the imaging object is a tire and the one or more images captured by the imaging system 1 is used for tire inspection will be described as an example. In the following, a case where the imaging system 1 captures one or more images used for the photometric stereo method will be described as an example.

Black objects such as tires have low light reflectance, and it is relatively difficult to grasp the shape of the surface from an image. In a case where the imaging object is a tire, in this respect, it is expected that the effect of enhancing the contrast of the surface by applying the photometric stereo method to the image captured by the imaging system 1 can be more remarkably obtained.

In a case where the imaging object is a tire, it is also possible to determine whether a depth of the tire groove is sufficient using the one or more images captured by the imaging system 1.

Therefore, the object to be imaged by the imaging system 1 is not limited to a specific object. A method of performing data processing on the shape of the surface of the imaging object using the one or more images captured by the imaging system 1 is not limited to a specific method.

The general-purpose imaging device 910 is a device including the camera 911, and captures one or more images with the camera 911 in a state of being mounted to the imaging apparatus 100. The one or more images captured by the general-purpose imaging device 910 is associated with the one or more images captured by the imaging system 1.

The general-purpose imaging device 910 is not limited to a specific type of device. For example, various devices including a camera such as a smartphone, a tablet terminal device with a camera, or a digital camera can be used as the general-purpose imaging device 910. In particular, it is not necessary to prepare a dedicated device for the imaging system 1 as the general-purpose imaging device 910, and a general-purpose device (a device that can be used for applications other than the imaging system 1) can be used.

The imaging apparatus 100 causes the general-purpose imaging device 910 to capture an image with each of a plurality of patterns of illumination patterns (patterns of turning on or off the light sources 131) in a state where the general-purpose imaging device 910 is mounted.

The mounting unit 110 accepts mounting of the general-purpose imaging device 910 and grips the general-purpose imaging device 910.

The mounting unit 110 is associated with an example of mounting means.

The mounting unit 110 is configured to be able to mount various types of general-purpose imaging devices 910. In particular, the mounting unit 110 is configured to be able to mount the general-purpose imaging devices 910 of various sizes.

The shape of the mounting unit 110 and the method by which the mounting unit 110 grips the general-purpose imaging device 910 are not limited to a specific shape and method. For example, the mounting unit 110 may include two arms, and the general-purpose imaging device 910 may be gripped by being sandwiched between the two arms. Alternatively, the mounting unit 110 may include a component provided with a hole into which the general-purpose imaging device 910 is inserted, and the size and shape of the hole may change in a state where the general-purpose imaging device 910 is inserted to grip the general-purpose imaging device 910. Alternatively, the mounting unit 110 may include a belt, and the belt may be wound around the general-purpose imaging device 910 to grip the general-purpose imaging device 910.

The position adjustment unit 120 adjusts the positional relationship between the camera 911 and the light source 131. In particular, the position adjustment unit 120 adjusts the positional relationship between the camera lens 912 and the light source 131. As a result, it is possible to use devices in which the cameras are located at various positions as the general-purpose imaging device 910, for example, various smartphones can be used as the general-purpose imaging device 910.

The position adjustment unit 120 is associated with an example of position adjustment means.

The position adjustment unit 120 may be configured as a mechanism that adjusts a relative positional relationship between the main body of the imaging apparatus 100 and the general-purpose imaging device 910. Alternatively, the position adjustment unit 120 may be configured as a mechanism that adjusts the relative positional relationship between the main body of the imaging apparatus 100 and the light source 131. Alternatively, the position adjustment unit 120 may be configured as a mechanism for adjusting the positional relationship between both of them.

The position adjustment unit 120 may be provided in such a way that the positional relationship between the camera lens 912 and the light source 131 can be adjusted by three axes. For example, the position adjustment unit 120 may be provided in such a way as to be able to adjust the positional relationship between the camera lens 912 and the light sources 131 in each of three directions of the optical axis direction of the camera 911 and the x direction and the y direction of the plane orthogonal to the optical axis.

The position adjustment unit 120 may automatically or semiautomatically adjust the positional relationship between the camera lens 912 and the light sources 131. Alternatively, the positional relationship between the camera lens 912 and the light sources 131 may be manually adjusted using the position adjustment unit 120.

The illumination unit 130 illuminates a tire that is an imaging object with light (illumination light).

Each of the light sources 131 is provided in such a way as to be capable of illuminating the imaging region of the camera 911. In a state in which the camera 911 faces the direction of the imaging object and the positional relationship between the camera lens 912 and the light sources 131 is adjusted by the position adjustment unit 120, each of the light sources 131 may be arranged at a position and an orientation capable of illuminating the imaging region of the camera 911.

It is possible to switch on or off for each light source 131. The pattern of turning on or off the light sources 131 is also referred to as an illumination pattern of the illumination unit 130 or a lighting pattern of the light sources 131. The illumination pattern of the illumination unit 130 is also simply referred to as an illumination pattern. The lighting pattern of the light sources 131 is also simply referred to as a lighting pattern.

The wavelength of the light output from the light sources 131 may be the same in all the light sources 131, or may be different for each light source 131. The light output from the light sources 131 is not limited to visible light, and can be light of various wavelengths that can be imaged by the camera 911.

The lighting pattern of the light sources 131 may include a pattern in which all the light sources 131 are turned off. In this case, the camera 911 may image an imaging object illuminated with light from a light source other than the light sources 131 of the illumination unit 130.

The number of the light sources 131 included in the illumination unit 130 may be one or more, and is not limited to a specific number. By switching the lighting pattern of the light source 131, the illumination pattern of light to the imaging object may be switched. In particular, it is only necessary to switch the illumination direction of light to the imaging object.

In a case where the one or more images captured by the imaging system 1 is used for the photometric stereo method, the imaging system 1 captures an image with each of three or more lighting patterns. For this purpose, the illumination unit 130 includes two or more light sources 131.

On the other hand, in a case where the imaging system 1 captures an image with each of the two patterns of lighting patterns, it is expected that the contrast of the surface can be enhanced as compared with a case where the imaging system 1 captures an image with only one pattern of lighting patterns.

The synchronization unit 150 switches the lighting pattern of the light sources 131.

Then, the synchronization unit 150 synchronizes the lighting pattern of the light sources 131 with the imaging timing of the camera 911, and causes the camera 911 to capture an image for each lighting pattern. During exposure in imaging by the camera 911, the synchronization unit 150 maintains the same lighting pattern without switching the lighting pattern of the light sources 131.

The synchronization unit 150 is associated with an example of synchronization means.

The synchronization unit 150 switches the lighting pattern of the light sources 131 of two or more patterns in which the illumination direction of light with respect to the imaging object is different. As a result, the imaging object is illuminated with light in each of the two or more illumination directions.

For example, for each lighting pattern of the light sources 131, only one of the two or more light sources 131 may be turned on, and the other light sources 131 may be turned off.

Alternatively, the lighting pattern of the light sources 131 may include a pattern in which two or more light sources 131 are turned on.

For example, in a case where the brightness is insufficient in a case where only one light source 131 is turned on, the plurality of light sources 131 is simultaneously turned on, in such a way that the imaging object can be illuminated brighter.

In a case where a shadow portion can be formed on the imaging object only by turning on one light source 131, the shadow portion of the imaging object can be eliminated or further reduced by illuminating light from a plurality of directions by the plurality of light sources 131. As a result, it is expected that an image in which an outer shape of the imaging object becomes clearer can be obtained. As described above, it is expected that more information can be obtained in a case where the plurality of light sources 131 is turned on than in a case where only one light source 131 is turned on.

Since the plurality of light sources 131 is simultaneously turned on, the number of times of imaging by the camera 911 is reduced as compared with the case where the light sources 131 are sequentially turned on one by one. In this respect, the time required for imaging performed by the imaging system 1 can be relatively shortened.

As described above, the lighting pattern of the light sources 131 may include a pattern in which all the light sources 131 are turned off.

The synchronization unit 150 may switch three or more lighting patterns. Then, the general-purpose imaging device 910 may capture an image (that is, the camera 911 captures an image) for each lighting pattern of the light sources 131, that is, for each illumination direction of light from the illumination unit 130. In this case, the imaging system 1 can capture one or more images to be used for the photometric stereo method.

The camera 911 may capture a moving image. In this case, the synchronization unit 150 may switch the lighting pattern of the light sources 131 in such a way that the duration of each lighting pattern of the light sources 131 is equal to or longer than three frames of the moving image. As a result, for each lighting pattern of the light sources 131, it is expected that an image by the illumination light of the lighting pattern can be captured in an image of at least one frame.

The synchronization unit 150 may be configured as a part of the imaging apparatus 100. For example, the imaging apparatus 100 may include a computer such as a single-board computer (SBC), and the function of the synchronization unit 150 may be executed by the computer executing a program. Alternatively, the function of the synchronization unit 150 may be implemented using an application specific integrated circuit (ASIC), a field programmable gate array (FPGA), or the like, and mounted on the imaging apparatus 100.

Alternatively, the synchronization unit 150 may be configured outside the imaging apparatus 100. For example, a computer such as a smartphone or a tablet terminal device may be used as the general-purpose imaging device 910, and an application program functioning as the synchronization unit 150 may be executed.

Alternatively, a computer having a configuration outside the imaging system 1 may function as the synchronization unit 150, and the computer and the imaging apparatus 100 or the general-purpose imaging device 910 may communicate with each other.

The operation unit 160 accepts a user operation related to imaging by the imaging system 1.

The operation unit 160 is associated with an example of operation means.

For example, the operation unit 160 may accept a user operation instructing start of imaging by the imaging system 1. Then, the synchronization unit 150 may automatically repeat the control of the lighting pattern of the light source 131 and the control of imaging by the camera 911 with the acceptance of the user operation by the operation unit 160 as a trigger, and capture an image by the camera 911 with all the preset lighting patterns.

Alternatively, the operation unit 160 may accept a user operation for instructing the camera 911 to capture an image every time. Then, the synchronization unit 150 may control the lighting pattern of the light sources 131 and control one-time imaging by the camera 911 every time the operation unit 160 accepts a user operation.

Alternatively, the imaging system 1 may automatically start capturing an image to be used for the photometric stereo method. For example, the synchronization unit 150 may determine whether the camera 911 can capture an image of the imaging object based on the image captured by the camera 911. Then, in a case where it is determined that the camera 911 can image the imaging object, the synchronization unit 150 may switch the lighting pattern of the light sources 131 and cause the camera 911 to capture an image for each lighting pattern.

In this case, the imaging system 1 may not include the operation unit 160.

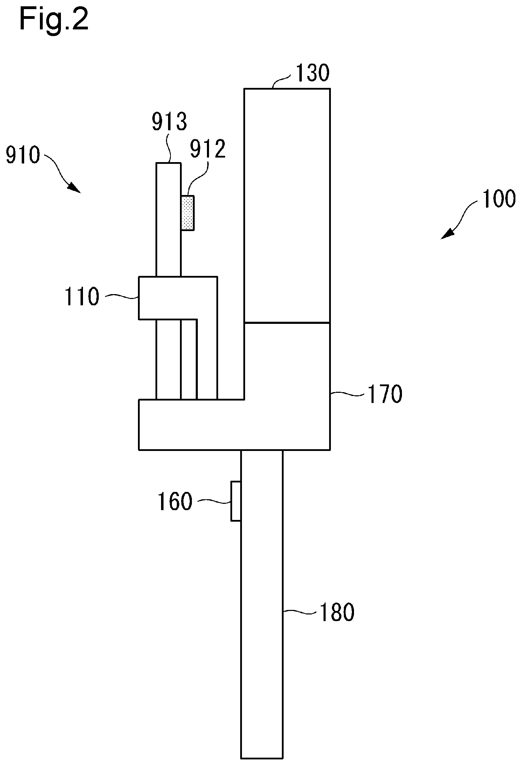

Fig. 2 is a diagram illustrating an example of an appearance of the imaging system 1. Fig. 2 illustrates an example of an appearance when the imaging system 1 is viewed from the side (in particular, on a lateral side with respect to an optical axis direction of the camera 911) in a state where the general-purpose imaging device 910 is mounted to the imaging apparatus 100.

In Fig. 2, a mounting unit 110, an illumination unit 130, an operation unit 160, an imaging apparatus main body 170, and a handle 180 of the imaging apparatus 100 are illustrated. Fig. 2 illustrates a camera lens 912 of the general-purpose imaging device 910 and a general-purpose imaging device main body 913.

Of the parts in Fig. 2, parts having similar functions associated with the parts in Fig. 1 are denoted by the same reference numerals (100, 110, 130, 910, 912), and a detailed description thereof will be omitted here.

In the example of Fig. 2, the mounting unit 110 and the illumination unit 130 are provided in the imaging apparatus main body 170.

The imaging apparatus main body 170 is a portion of the imaging apparatus 100 provided in such a way that the mounting unit 110, the illumination unit 130, and the handle 180 can be mounted.

The synchronization unit 150 may be provided in the imaging apparatus main body 170. Alternatively, as described above, the synchronization unit 150 may be provided outside the imaging apparatus 100, for example, outside the imaging apparatus main body 170.

The mounting unit 110 may be configured to be able to adjust the positional relationship between the camera 911 and the light sources 131 by relatively moving with respect to the imaging apparatus main body 170 in a state of holding the general-purpose imaging device 910. In this case, a mechanism that movably supports the mounting unit 110 with respect to the imaging apparatus main body 170 is associated with an example of the position adjustment unit 120. The position adjustment unit 120 may be provided as a part of the imaging apparatus main body. Alternatively, the position adjustment unit 120 may be provided as a portion different from the imaging apparatus main body.

The relative position of the mounting unit 110 with respect to the imaging apparatus main body 170 may be automatically moved, or may be manually moved.

In addition to or instead of the movement of the relative position of the mounting unit 110 with respect to the imaging apparatus main body 170, the illumination unit 130 may move relative to the imaging apparatus main body 170, in such a way that the positional relationship between the camera 911 and the light source 131 can be adjusted. In this case, a mechanism that movably supports the illumination unit 130 with respect to the imaging apparatus main body 170 is associated with an example of the position adjustment unit 120.

The movement of a relative position of the illumination unit 130 with respect to the imaging apparatus main body 170 may be automatically performed, or may be manually performed.

In the example of Fig. 2, the imaging apparatus main body 170 and the handle 180 are connected. The handle 180 is provided with an operation unit 160 in the form of a push button. The push button as the operation unit 160 accepts a user operation for instructing imaging.

In the example of Fig. 2, the handle 180 has a rod shape in such a way as to be easily gripped by the user. The user holds the imaging system 1 by grasping the handle 180, and can adjust the position and orientation of the imaging system 1 by moving a hand. Then, the user can cause the general-purpose imaging device 910 to capture an image by pressing a push button as an example of the operation unit 160 with a finger.

Alternatively, the operation unit 160 may be provided in a form other than the form provided in the handle 180, such as a form of a remote controller. As described above, the imaging apparatus 100 may not include the operation unit 160.

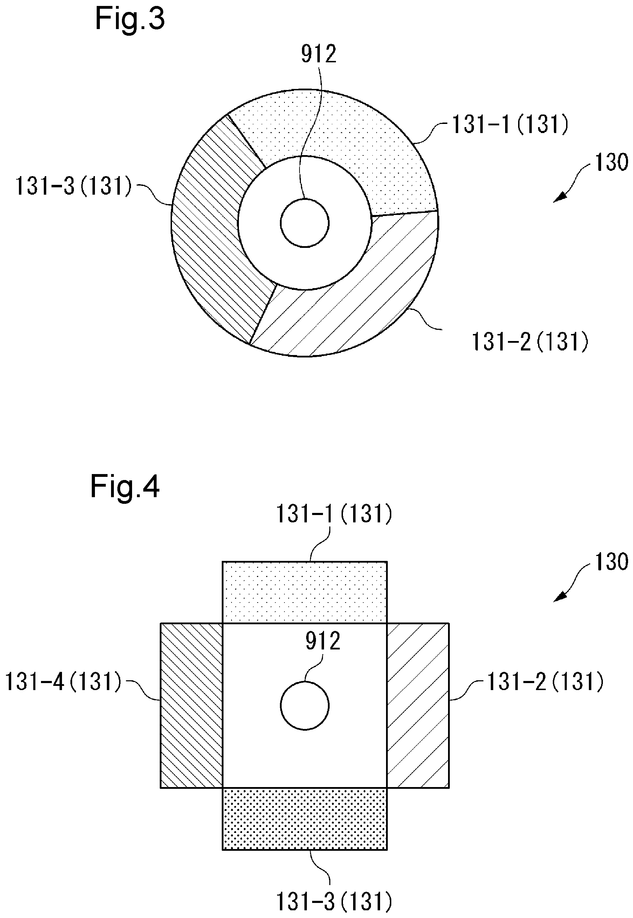

Fig. 3 is a diagram illustrating a first example of the arrangement of the light sources 131. Fig. 3 illustrates an example in which the number of light sources 131 is three. In the example of Fig. 3, if the three light sources 131 are distinguished, they are also referred to as light sources 131-1, 131-2, and 131-3.

In the example of Fig. 3, three light sources 131 are arranged in a ring shape (donut shape). The camera 911 captures an image of the imaging object through the portion of a hole at the center of the ring shape. In the example of Fig. 3, an example is illustrated in which the camera lens 912 is located at the center of a hole at the center of a ring shape in which the three light sources 131 are arranged.

Fig. 4 is a diagram illustrating a second example of the arrangement of the light sources 131. Fig. 4 illustrates a first example in a case where the number of light sources 131 is four. In the example of Fig. 4, if the four light sources 131 are distinguished, they are also referred to as light sources 131-1, 131-2, 131-3, and 131-4.

In the example of Fig. 4, four light sources 131 are arranged vertically and horizontally around a square. The camera 911 captures an image of an imaging object through a portion of a square hole in the center of the four light sources 131. In the example of Fig. 4, an example is illustrated in which the camera lens 912 is located at the center of the square hole at the center of the four light sources 131.

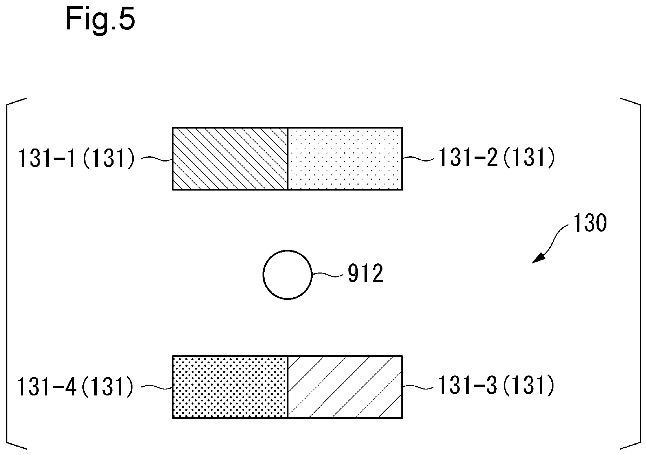

Fig. 5 is a diagram illustrating a third example of the arrangement of the light sources 131. Fig. 5 illustrates a second example in a case where the number of light sources 131 is four. In the example of Fig. 5, if the four light sources 131 are distinguished, they are also referred to as light sources 131-1, 131-2, 131-3, and 131-4.

In the example of Fig. 5, two light sources arranged side by side are arranged vertically. Specifically, the light source 131-2 is disposed on the right side of the light source 131-1 as viewed in Fig. 5. The light source 131-3 is disposed below the light source 131-2, and the light source 131-4 is disposed on the left side of the light source 131-3 as viewed in Fig. 5.

The camera 911 images the image object from between the light sources 131 arranged vertically. In the example of Fig. 5, an example is shown in which the camera lens 912 is located at the center between the set of light sources 131-1 and 131-2 and the set of light sources 131-3 and 131-4 (the center of symmetry of the four light sources 131).

The number and arrangement of the light sources 131 are not limited to a specific number and arrangement, and can be various numbers and arrangements capable of illuminating the imaging object with light from each of a plurality of directions. As described above, the lighting pattern in which all the light sources 131 are turned off and the light source outside the illumination unit 130 is used may be included.

From the viewpoint of illuminating the imaging object from various directions, the light sources 131 may be provided at a rotationally symmetric position about the optical axis of the camera 911 as in the example of Fig. 3 and the example of Fig. 4, but the present invention is not limited thereto.

A mark may be provided for the user to adjust the position and orientation of the camera 911 (imaging position and imaging direction by the camera 911). For example, the illumination unit 130 may include a transparent plate provided movably, and a mark may be shown on the plate.

The illumination unit 130 that moves the plate is associated with an example of mark presentation means.

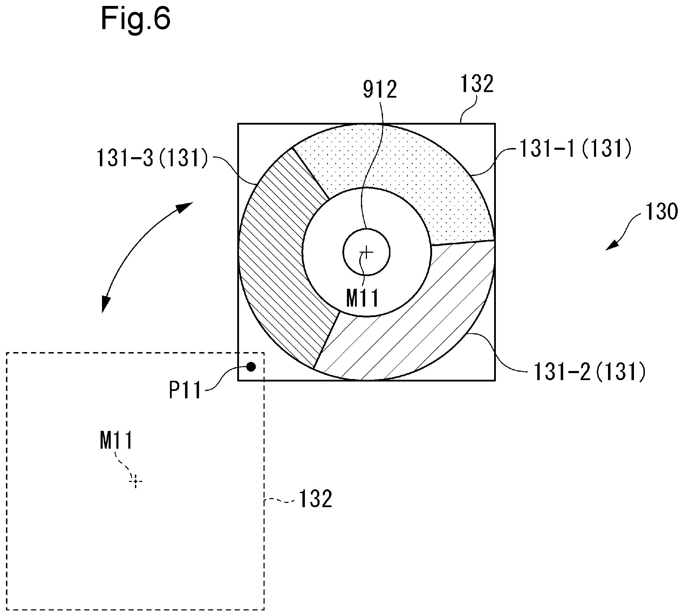

Fig. 6 is a diagram illustrating an example of setting a mark for the user to adjust the position and orientation of the camera 911.

In the example of Fig. 6, the illumination unit 130 includes the light sources 131 arranged as in the example of Fig. 3 and a transparent plate 132.

The plate 132 is provided in the illumination unit 130 in such a way as to be rotatable about a point P11 as a rotation axis. A mark M11 having a cross shape is illustrated on the plate 132.

In a case where the user adjusts the position and orientation of the camera 911, the plate 132 is set such that the mark M11 is positioned on the optical axis of the camera 911. As a result, the mark M11 is reflected in a preview image or a finder by the general-purpose imaging device 910. The user can adjust the position and orientation of the camera 911 with reference to the preview image or a positional relationship between the imaging object and the mark M11 in the finder.

On the other hand, in a case where the camera 911 captures an image of the imaging object, the plate 132 is moved in such a way that the plate 132 is out of the imaging range (outside the angle of view) of the camera 911. As a result, it is possible to prevent the mark M11 from being included in the image captured by the camera 911.

The user may manually set and move the plate 132.
Alternatively, the illumination unit 130 may automatically set and move the plate 132. For example, the plate 132 may be automatically moved at the time of capturing an image by the camera 911, and the plate 132 may be automatically set upon completion of the imaging.

The positional relationship between the shape of the mark for the user to adjust the position and orientation of the camera 911 and the imaging range of the camera 911 is not limited to a specific one, and may be various shapes and positions that can be referred to by the user.

The form in which the mark for the user to adjust the position and orientation of the camera 911 is provided is not limited to a specific form, and may be various forms.

In a case where a mark for the user to adjust the position and orientation of the camera 911 is provided, the number and arrangement of the light sources 131 are not limited to a specific number and arrangement, and may be various numbers and arrangements as described above.

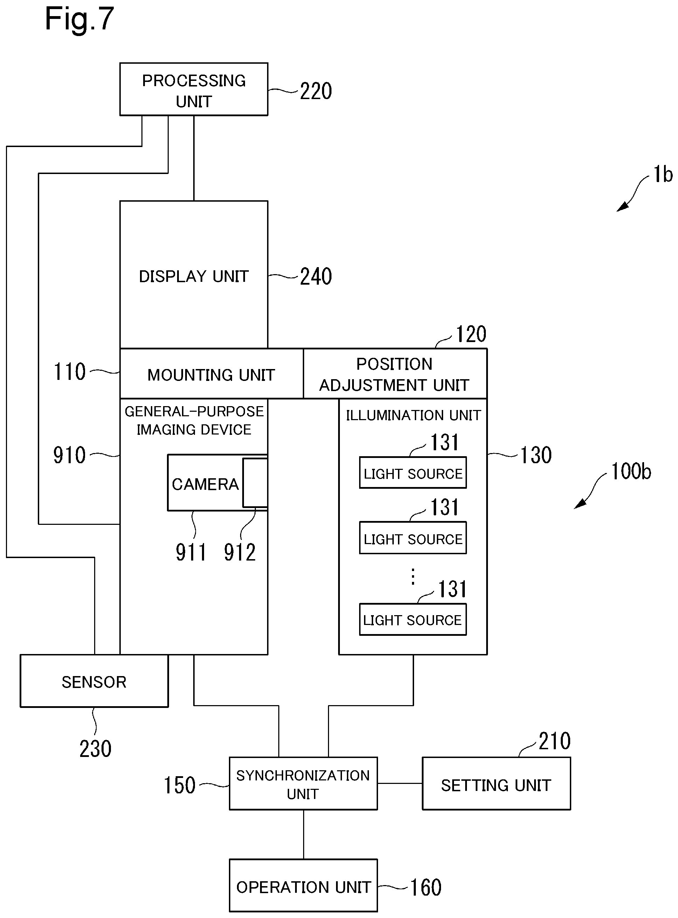

Fig. 7 is a diagram illustrating another example of the configuration of the imaging apparatus. In the configuration illustrated in Fig. 7, the imaging apparatus 100b includes a mounting unit 110, a position adjustment unit 120, an illumination unit 130, a synchronization unit 150, an operation unit 160, a setting unit 210, a processing unit 220, a sensor 230, and a display unit 240. The illumination unit 130 includes light sources 131.

Fig. 7 illustrates the general-purpose imaging device 910, the camera 911 of the general-purpose imaging device 910, and the camera lens 912 of the camera 911. The general-purpose imaging device 910 may have a configuration outside the imaging apparatus 100b.

A combination of the imaging apparatus 100b and the general-purpose imaging device 910 is also referred to as an imaging system 1b.

In the configuration illustrated in Fig. 7, parts having similar functions to those of the respective parts in Fig. 1 are denoted by the same reference numerals (110, 120, 130, 131, 150, 160, 910, 911, 912), and a detailed description thereof will be omitted here.

The configuration of the imaging system 1b is configured to further include a setting unit 210, a processing unit 220, a sensor 230, and a display unit 240 from the configuration of the imaging system 1. The imaging system 1b is associated with an example of the imaging system 1. The imaging apparatus 100b is associated with an example of the imaging apparatus 100.

The setting unit 210, the processing unit 220, the sensor 230, or the display unit 240, or two or more thereof may be configured outside the imaging apparatus 100b.

As in the case of the imaging system 1, the synchronization unit 150, the operation unit 160, or both may be configured outside the imaging apparatus 100b.

Similarly to the case of the imaging system 1, the imaging system 1b may not include the operation unit 160.

The setting unit 210 performs various settings related to the imaging system 1.

For example, the setting unit 210 may set an exposure time of the camera 911. Furthermore, in a case where the general-purpose imaging device 910 captures a moving image, the setting unit 210 may set a frame rate.

The setting unit 210 may set the lighting pattern of the light sources 131. For example, the setting unit 210 may set which light source 131 is turned on in what order. As described above with respect to the lighting pattern, the setting unit 210 may set the lighting pattern in which the plurality of light sources 131 is simultaneously turned on.
The setting unit 210 may set a lighting pattern in which all the light sources 131 is turned off.

The intensity of illumination by the light sources 131 (the luminous intensity of the light sources 131) may be variable, and the setting unit 210 may set the intensity of illumination.

The setting unit 210 may automatically perform all or some of the settings. In that case, the setting unit 210 may perform setting using a known setting method. For example, the setting unit 210 may set an exposure time of the camera 911 using a technique of auto exposure (AE).

The setting unit 210 may perform all or some of the settings in accordance with a user operation. As a user interface (UI) in that case, a user interface included in the general-purpose imaging device 910 may be used. Alternatively, the user interface may be provided separately from the general-purpose imaging device 910, for example, the operation unit 160 may include a dial for accepting a user operation for setting an exposure time or the like.

The processing unit 220 performs processing on an image captured by the camera 911.

For example, the processing unit 220 may generate a merged image of images captured with each of a plurality of illumination patterns.

The processing unit 220 may estimate the shape (for example, a surface normal vector) and the depth of the imaging object or any one thereof based on the image captured with each of the plurality of illumination patterns.

Furthermore, in a case where the one or more images captured by the imaging system 1 is used for inspection of the imaging object, the processing unit 220 may perform defect determination such as determination of the presence or absence of a defective part based on a predetermined determination rule. For example, the processing unit 220 may store a determination threshold for the presence or absence of a defect, such as a threshold for the size of a flaw. Then, the processing unit 220 may compare a size of a candidate for the defective part such as a scratch detected from the captured one or more images with a threshold, and determine that there is a defect when the size of the candidate for the defective part is equal to or more than the threshold.

Alternatively, the processing unit 220 may determine a defect by using a learned machine learning model. The machine learning in this case may be performed using training data in which a set of images captured by the imaging system 1 is associated with correct data indicating the presence or absence of a defect.

The sensor 230 measures the position and orientation of the camera 911 (imaging position and imaging direction by the camera 911). For example, the sensor 230 may be configured using a gyro sensor.

As described above, the sensor 230 may be configured as a part of the imaging apparatus 100 or may be configured outside the imaging apparatus 100. For example, in a case where the general-purpose imaging device 910 includes a gyro sensor, the gyro sensor may be used as the sensor 230.

The processing unit 220 may generate data in which the shape of the imaging object is mapped on a three-dimensional coordinate space based on the image captured by the camera 911 at a plurality of imaging positions and imaging directions and the information on the position and orientation of the camera 911.

The processing unit 220 may extract a portion in which imaging is insufficient, a portion in which estimation accuracy based on the imaging result is insufficient, or both, of the imaging object based on the result of the mapping.

For example, the processing unit 220 may determine the presence or absence of a portion of the imaging object that has not been imaged. In a case where it is determined that there is a portion that has not been imaged, the processing unit 220 may present information (for example, a stereoscopic image of an imaged portion) indicating the portion to the user to urge the user to image the portion that has not been image.

As described above, the processing unit 220 may be configured as a part of the imaging apparatus 100b or may be configured outside the imaging apparatus 110b.

For example, the function of the processing unit 220 may be provided by a computer on a cloud. Then, the computer may communicate with the imaging system 1 (for example, communication is performed with the general-purpose imaging device 910), receive an image to be processed, and transmit a processing result.

The function of the processing unit 220 may be provided as the function of the general-purpose imaging device 910.

The display unit 240 visualizes a processing result by the processing unit 220 and presents the result to the user.

As described above, the display unit 240 may be configured as a part of the imaging apparatus 100b or may be configured outside the imaging apparatus 110b.

For example, a display screen included in the general-purpose imaging device 910 may be used as the display unit 240. Alternatively, the imaging apparatus 100b may include a display device as the display unit 240. Alternatively, the display device as the display unit 240 may be provided as a device outside the imaging apparatus 100b and the general-purpose imaging device 910.

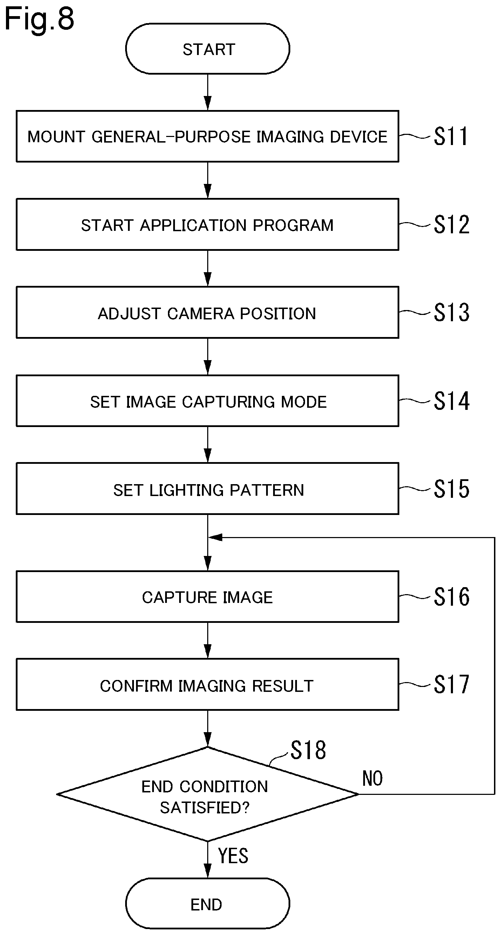

Fig. 8 is a diagram illustrating an example of a processing procedure of imaging using the imaging system 1. As described above, the imaging system 1b is associated with an example of imaging system 1. In Fig. 8, processing performed by the setting unit 210, processing performed by the processing unit 220, or processing performed by the display unit 240 may be illustrated as processing performed by the imaging system 1.

In the processing illustrated in Fig. 8, the user mounts the general-purpose imaging device 910 to the imaging apparatus 100 (step S11).

Next, the general-purpose imaging device 910 starts an application program for the imaging system 1 (step S12). The function of the application program may include a function of causing the camera 911 to capture an image in response to an instruction from the synchronization unit 150 as a trigger. The function of the application program may include a function of aligning the camera 911 with respect to the position of the light sources 131, a function of the synchronization unit 150, a function of the setting unit 210, a function of the processing unit 220, or some of these functions.

The general-purpose imaging device 910 may start the application program in response to a user operation.

Next, the position adjustment unit 120 adjusts the position of the camera 911 with respect to the position of the light sources 131 (step S13). The user may manually move the general-purpose imaging device 910 or the illumination unit 130, or both. In this case, it can be understood that the position adjustment unit 120 adjusts the position of the camera 911 with respect to the position of the light sources 131 according to an operation performed by the user.

Alternatively, the position adjustment unit 120 may include a power source such as a motor for relatively moving the mounting unit 110 with respect to the imaging apparatus main body 170, relatively moving the illumination unit 130 with respect to the imaging apparatus main body 170, or moving both of them. Then, the position adjustment unit 120 may adjust the position of the camera 911 with respect to the position of the light sources 131 by moving the mounting unit 110, the illumination unit 130, or both in accordance with an instruction from the user by a user operation.

Alternatively, the position adjustment unit 120 may automatically adjust the position of the camera 911 with respect to the position of the light sources 131. For example, in a state where the mark is set as in the example of Fig. 6, the position adjustment unit 120 may move the camera 911, the illumination unit 130, or both in such a way that the image of the mark is positioned at the center of the image captured by the camera 911.

Next, the user or the setting unit 210 sets an image capturing mode (step S14). The setting of the image capturing mode here may include selection of a still image capturing mode in which the camera 911 captures a still image or a moving image capturing mode in which the camera 911 captures a moving image. The setting of the imaging mode here may include setting of imaging conditions such as an exposure time according to the type of the imaging object.

In a case where the setting unit 210 automatically sets the image capturing mode, the general-purpose imaging device 910 may function as the setting unit 210 by executing the application program started in step S12 to set the image capturing mode.

Next, the user or the setting unit 210 sets the lighting pattern of the light source 131 (step S15).

For example, the lighting pattern may be determined for each type of imaging object. Then, the setting unit 210 may automatically select the lighting pattern according to the type of the imaging object.

The lighting pattern may be determined for each type (for example, for each model number) of the general-purpose imaging device 910. Then, the setting unit 210 may determine the type of the general-purpose imaging device 910 or select the lighting pattern depending on the type of the general-purpose imaging device 910 according to a user operation indicating the type of the general-purpose imaging device 910.

Next, the imaging system 1 captures one or more images (step S16).

For example, the synchronization unit 150 may control the general-purpose imaging device 910 and the illumination unit 130 to cause the camera 911 to capture an image for each lighting pattern. Then, in a case where imaging is completed with all the set lighting patterns, the synchronization unit 150 may notify the user via the display unit 240 that imaging from one place has been completed.

While the imaging system 1 captures an image with the camera 911 for each lighting pattern, the user does not move the camera 911. As a result, it is possible to obtain images captured from the same position in each of a plurality of illumination directions of light, and the obtained images can be used for the photometric stereo method.

Alternatively, the user may move the camera 911 slowly to such an extent that image blurring does not occur. In this case, the sensor 230 may measure the position and orientation of the camera 911 at each imaging timing by the camera 911. The processing unit 220 can refer to the position and orientation of the camera 911 at the time of capturing an image when performing processing on the captured image.

Next, the user or the imaging system 1 confirms the imaging result (step S17).

Then, the imaging system 1 determines whether an imaging end condition is satisfied according to the confirmation result in step S17 (step S18).

For example, the display unit 240 may display an imaging result such as a merged image of captured images. Then, the operation unit 160 may accept a user operation instructing either end of imaging or further imaging. The imaging end condition in this case can be that a user operation for instructing the end of imaging has been performed.

Alternatively, as described above, the processing unit 220 may extract a portion in which imaging is insufficient, a portion in which estimation accuracy based on an imaging result is insufficient, or both of them in the imaging object. The imaging end condition in this case can be that the processing unit 220 determines that there is no portion with insufficient imaging, determines that there is no portion with insufficient estimation accuracy based on the imaging result, or determines that there is none of these based on the imaging result.

If the imaging system 1 determines that the imaging end condition is not satisfied (step S18: NO), the processing returns to step S16. In this case, the imaging system 1 may further notify the user that an image is to be captured using, for example, the display unit 240, and in a case where the user adjusts a position and an orientation of the camera 911 and operates the operation unit 160 to give an instruction to capture an image, the imaging system 1 may capture an image in step S16. Then, after step S16, the processing may proceed to step S17.

On the other hand, in a case where it is determined in step S18 that the imaging end condition is satisfied (step S18: YES), the imaging system 1 ends the processing of Fig. 8.

As described above, the mounting unit 110 can detachably mount the general-purpose imaging device 910 including the camera 911.

The light sources 131 can be switched on or off for each light source 131, and each light source 131 is provided in such a way as to illuminate the imaging region of the camera 911.

According to the imaging apparatus 100, a camera of a general-purpose device can be used to capture an image for data processing regarding the shape of the surface of the imaging object.

In particular, according to the imaging apparatus 100, the user can mount a general-purpose device including a camera to the imaging apparatus 100. Then, the imaging apparatus 100 can switch a pattern of turning on or off the light sources 131 in a state where a general-purpose device including a camera is mounted, and cause the camera 911 to capture an image for each pattern. As a result, a captured image of the imaging object can be obtained in each of the plurality of illumination directions of light with respect to the imaging object, and the obtained captured image can be used for data processing regarding the shape of the surface of the imaging object. For example, in a case where a captured image of an imaging object is obtained in each of three or more light illumination directions, a photometric stereo method can be applied to the obtained captured image.

The user can cause the camera 911 to image the imaging object at various positions and orientations by moving the imaging apparatus 100. For example, even in a case where the imaging object is large, and when the entire imaging object is imaged in one imaging, the image becomes rough, and the accuracy of image processing becomes low, it is possible to cause the camera 911 to image the imaging object at various positions and orientations to obtain an image of the entire imaging object. According to the imaging apparatus 100, in this respect, data processing regarding the shape of the surface can be performed on the entire imaging object.

The position adjustment unit 120 adjusts the positional relationship between the camera 911 and the light sources 131.

According to the imaging apparatus 100, various devices having different camera positions can be used as the general-purpose imaging device 910.

The illumination unit 130 presents a mark for adjusting the positional relationship between the camera 911 and the light sources 131 at a position where the mark can fall within an imaging range of the camera 911.

The position adjustment unit 120 adjusts the positional relationship between the camera 911 and the light sources 131 according to a user operation in a state where the mark is presented.

According to the imaging apparatus 100, the user can adjust the position and orientation of the camera 911 by confirming the position of the mark with the preview image by the general-purpose imaging device 910, the finder, or the like. As a result, the camera 911 can image the imaging object in a state where the position and the orientation are adjusted with relatively high accuracy. In this respect, the imaging apparatus 100 is expected to perform data processing on the shape of the surface of the imaging object with relatively high accuracy using the image captured by the camera 911.

The synchronization unit 150 synchronizes the lighting pattern of one or more light sources 131 with the imaging timing of the camera 911.

According to the imaging apparatus 100, the imaging object can be more reliably imaged for each lighting pattern of the light sources 131.

The operation unit 160 accepts a user operation for instructing imaging.

In a case where a user operation for instructing imaging is performed, the synchronization unit 150 causes the camera 911 to capture an image for each lighting pattern of the light sources 131.

According to the imaging apparatus 100, the movement of the camera 911 by the user (movement of the imaging apparatus 100) can be synchronized with the imaging of each lighting pattern of the light sources 131 by the illumination unit 130 and the camera 911. For example, every time the user moves the camera 911, the camera 911 can capture an image in each lighting pattern, and captured images of the imaging object can be obtained at various positions and directions of the camera 911.

The lighting pattern of the light sources 131 includes a pattern in which all the light sources 131 are turned off.

According to the imaging apparatus 100, it is possible to provide lighting patterns equal to or more than the number of light sources 131. For example, according to the imaging apparatus 100, in a case where the illumination unit 130 includes the two light sources 131, the captured image of the imaging object can be obtained in each of the illumination directions of the light in the three directions including the illumination of the light from the light sources other than the illumination unit 130. In this case, a photometric stereo method can be applied to the obtained image.

The lighting pattern of the light sources 131 includes a pattern in which the plurality of light sources 131 is simultaneously turned on.

According to the imaging apparatus 100, in a case where the brightness is insufficient only by turning on one light source 131, it is possible to illuminate the imaging object more brightly by simultaneously turning on the plurality of light sources 131.

Furthermore, according to the imaging apparatus 100, in a case where a shadow portion is formed on the imaging object only by turning on one light source 131, the shadow portion of the imaging object can be eliminated or further reduced by emitting light from a plurality of directions by the plurality of light sources 131. According to the imaging apparatus 100, in this respect, it is expected that an image in which the outer shape of the imaging object is clearer can be obtained. As described above, it is expected that more information can be obtained in a case where the plurality of light sources 131 is turned on than in a case where only one light source 131 is turned on.

According to the imaging apparatus 100, since the plurality of light sources 131 is simultaneously turned on, the number of times of imaging by the camera 911 is reduced as compared with the case where the light sources 131 are sequentially turned on one by one.

According to the imaging apparatus 100, in this respect, the time required for imaging performed by the imaging system 1 can be relatively shortened.

The sensor 230 measures the position and orientation of the camera 911.

According to the imaging apparatus 100, it is possible to obtain information about the position and orientation of the camera 911 when the camera 911 captures an image. As a result, in a case where the camera 911 captures images of the imaging object at various positions and orientations, the captured images and the information about the position and orientation of the camera 911 can be used for data processing on the shape of the surface of the imaging object by the processing unit 220. According to the imaging apparatus 100, in this respect, it is expected that data processing regarding the shape of the surface of the imaging object can be performed with relatively high accuracy.

The illumination unit 130 includes a plurality of light sources 131.

According to the imaging apparatus 100, three or more lighting patterns can be provided, and the camera 911 can image the imaging object in each of three or more light illumination directions.

According to the imaging apparatus 100, a photometric stereo method can be applied to an image captured by the camera 911.

The illumination unit 130 includes three or more light sources 131.

According to the imaging apparatus 100, three or more lighting patterns in which one or more light sources 131 are turned on can be provided, and the camera 911 can image the imaging object in each of three or more light illumination directions. According to the imaging apparatus 100, it is expected that the brightness of the illumination light can be secured in each of the captured images by the camera 911, and in this respect, it is expected that the photometric stereo method is applied to the captured image, and data processing regarding the shape of the surface of the imaging object can be performed with relatively high accuracy.

### <Second example embodiment>

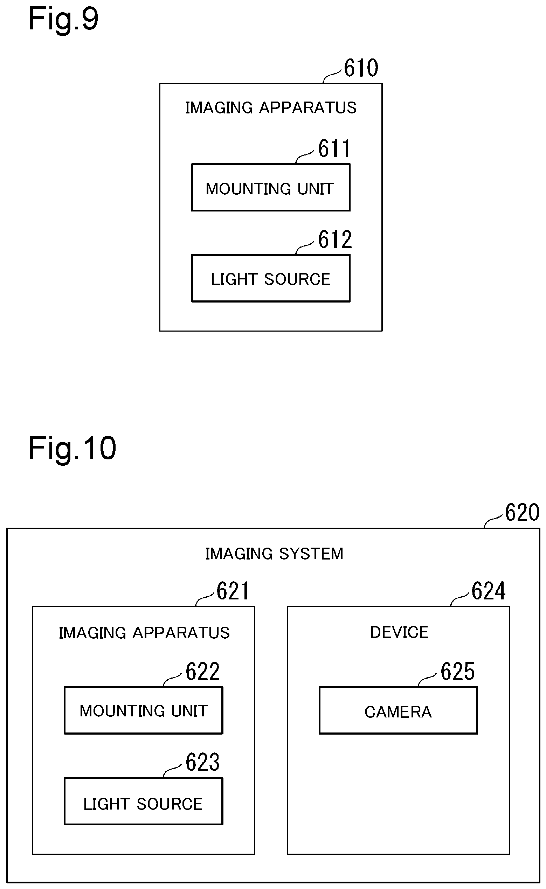

Fig. 9 is a diagram illustrating an example of a configuration of an imaging apparatus according to at least one example embodiment. In the configuration illustrated in Fig. 9, an imaging apparatus 610 includes a mounting unit 611 and one or more light sources 612.

With such a configuration, the mounting unit 611 can mount and detach a device including a camera. The light source 612 is switchable between on and off for each light source 612, and each light source 612 is provided in such a way as to illuminate an imaging region of the camera.

The mounting unit 611 is associated with an example of mounting means.

According to the imaging apparatus 610, a camera of a general-purpose device can be used to capture an image for data processing regarding the shape of the surface of the imaging object.

In particular, according to the imaging apparatus 610, the user can mount a general-purpose device including a camera to the imaging apparatus 610. Then, in a state where a general-purpose device including a camera is mounted, the imaging apparatus 610 can switch a pattern of turning on or off the light source and cause the camera to capture an image for each pattern. As a result, a captured image of the imaging object can be obtained in each of the plurality of illumination directions of light with respect to the imaging object, and the obtained captured image can be used for data processing regarding the shape of the surface of the imaging object. For example, in a case where a captured image of an imaging object is obtained in each of three or more light illumination directions, a photometric stereo method can be applied to the obtained captured image.

The user can cause the camera to image the imaging object at various positions and orientations by moving the imaging apparatus 610. For example, even in a case where the imaging object is large, and when the entire imaging object is imaged by one imaging, the image becomes rough, and the accuracy of image processing becomes low, it is possible to obtain an image of the entire imaging object by causing the camera to image the imaging object at various positions and orientations. According to the imaging apparatus 610, in this respect, data processing regarding the shape of the surface can be performed on the entire imaging object.

### <Third example embodiment>

Fig. 10 is a diagram illustrating an example of a configuration of an imaging system according to at least one example embodiment.

In the configuration illustrated in Fig. 10, an imaging system 620 includes an imaging apparatus 621 and a device 624. The imaging apparatus 621 includes a mounting unit 622 and one or more light sources 623. The device 624 includes a camera 625.

With such a configuration, the mounting unit 622 can mount and detach the device 624 including the camera 625.

The light source 623 can be switched on or off for each light source 623, and each light source 623 is provided in such a way as to illuminate the imaging region of the camera 625.

The mounting unit 622 is associated with an example of mounting means.

According to the imaging system 620, a camera of a general-purpose device can be used to capture an image for data processing regarding the shape of the surface of the imaging object.

In particular, according to the imaging system 620, the user can mount a general-purpose device including a camera to the imaging apparatus 621. Then, in a state where a general-purpose device including a camera is mounted, the imaging apparatus 621 can switch a pattern of turning on or off the light source and cause the camera to capture an image for each pattern. As a result, a captured image of the imaging object can be obtained in each of the plurality of illumination directions of light with respect to the imaging object, and the obtained captured image can be used for data processing regarding the shape of the surface of the imaging object. For example, in a case where a captured image of an imaging object is obtained in each of three or more light illumination directions, a photometric stereo method can be applied to the obtained captured image.

The user can cause the camera to image the imaging object at various positions and orientations by moving the imaging apparatus 621. For example, even in a case where the imaging object is large, and when the entire imaging object is imaged by one imaging, the image becomes rough, and the accuracy of image processing becomes low, it is possible to obtain an image of the entire imaging object by causing the camera to image the imaging object at various positions and orientations. According to the imaging system 620, in this respect, data processing regarding the shape of the surface can be performed on the entire imaging object.

### <Fourth example embodiment>

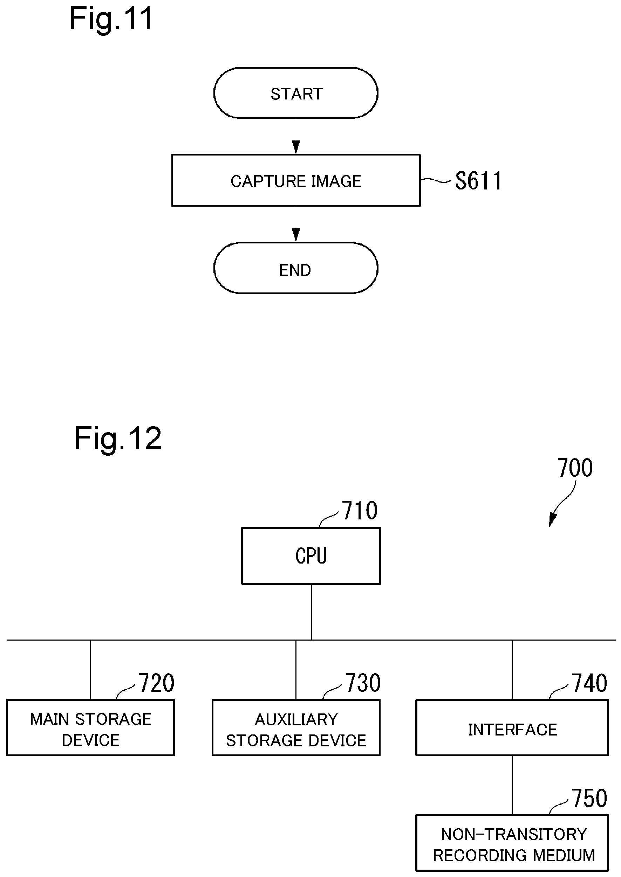

Fig. 11 is a diagram illustrating an example of a procedure of processing in an imaging method according to at least one example embodiment. The imaging method illustrated in Fig. 11 includes capturing one or more images (step S611).

In capturing one or more images (step S611), a computer that controls an imaging apparatus including mounting means for detachably mounting a device having a camera, and one or more light sources that switch between on and off for each light source that is provided to be capable of illuminating an imaging area of the camera, and the device having the camera, which is mounted to the imaging apparatus, causes the camera to capture an image in each of a plurality of lighting patterns by the one or more light sources.

According to the imaging method illustrated in Fig. 11, a camera of a general-purpose device can be used to capture an image for data processing related to the shape of the surface of the imaging object.

In particular, according to the imaging method illustrated in Fig. 11, the user can mount the general-purpose device including a camera to the imaging apparatus 621. Then, the imaging apparatus can switch a pattern of turning on or off the light source in a state where a general-purpose device including a camera is mounted, and cause the camera to capture an image for each pattern. As a result, a captured image of the imaging object can be obtained in each of the plurality of illumination directions of light with respect to the imaging object, and the obtained captured image can be used for data processing regarding the shape of the surface of the imaging object. For example, in a case where a captured image of an imaging object is obtained in each of three or more light illumination directions, a photometric stereo method can be applied to the obtained captured image.

The user can cause the camera to image the imaging object at various positions and orientations by moving the imaging apparatus. For example, even in a case where the imaging object is large, and when the entire imaging object is imaged by one imaging, the image becomes rough, and the accuracy of image processing becomes low, it is possible to obtain an image of the entire imaging object by causing the camera to image the imaging object at various positions and orientations. According to the imaging method illustrated in Fig. 11, in this respect, data processing regarding the shape of the surface can be performed on the entire imaging object.

Fig. 12 is a diagram illustrating an example of a configuration of a computer according to at least one example embodiment.

In the configuration illustrated in Fig. 12, a computer 700 includes a CPU 710, a main storage device 720, an auxiliary storage device 730, an interface 740, and a nonvolatile recording medium 750.

Any one or more of the imaging apparatus 100, the imaging apparatus 100b, the imaging apparatus 610, the imaging apparatus 621, the device 624, and the general-purpose imaging device 910 described above or a part thereof may be implemented in the computer 700. In that case, the operation of each processing unit described above is stored in the auxiliary storage device 730 in the form of a program. The CPU 710 reads the program from the auxiliary storage device 730, develops the program in the main storage device 720, and executes the above processing according to the program. The CPU 710 secures a storage area associated with each of the above-described storage units in the main storage device 720 according to the program. Communication between each device and another device is executed by the interface 740 having a communication function and performing communication under the control of the CPU 710.

The interface 740 has a port for the nonvolatile recording medium 750, and reads information from the nonvolatile recording medium 750 and writes information to the nonvolatile recording medium 750.

In a case where the imaging apparatus 100 is implemented in the computer 700, the operation of the synchronization unit 150 is stored in the auxiliary storage device 730 in the form of a program. The CPU 710 reads the program from the auxiliary storage device 730, develops the program in the main storage device 720, and executes the above processing according to the program.

The CPU 710 secures a storage area for the imaging apparatus 100 to perform processing in the main storage device 720 according to the program. Communication between the imaging apparatus 100 and another device is executed by the interface 740 having a communication function and operating under the control of the CPU 710. The interaction between the imaging apparatus 100 and the user is executed when the interface 740 includes an input device and an output device, information is presented to the user by the output device according to the control of the CPU 710, and a user operation is accepted by the input device.

In a case where the imaging apparatus 100b is implemented in the computer 700, the synchronization unit 150, the setting unit 210, and the processing unit 220, or some of the operations thereof are stored in the auxiliary storage device 730 in the form of a program. The CPU 710 reads the program from the auxiliary storage device 730, develops the program in the main storage device 720, and executes the above processing according to the program.

The CPU 710 secures a storage area for the imaging apparatus 100b to perform processing in the main storage device 720 according to the program. Communication between the imaging apparatus 100b and another device is executed by the interface 740 having a communication function and operating under the control of the CPU 710. The interaction between the imaging apparatus 100b and the user is executed when the interface 740 includes an input device and an output device, information is presented to the user by the output device according to the control of the CPU 710, and a user operation is accepted by the input device.

In a case where the imaging apparatus 610 is implemented in the computer 700, the operation thereof is stored in the auxiliary storage device 730 in the form of a program. The CPU 710 reads the program from the auxiliary storage device 730, develops the program in the main storage device 720, and executes the above processing according to the program.

The CPU 710 secures a storage area for the imaging apparatus 610 to perform processing in the main storage device 720 according to the program. Communication between the imaging apparatus 610 and another device is executed by the interface 740 having a communication function and operating under the control of the CPU 710. The interaction between the imaging apparatus 610 and the user is executed when the interface 740 includes an input device and an output device, information is presented to the user by the output device according to the control of the CPU 710, and a user operation is accepted by the input device.

In a case where the imaging apparatus 621 is implemented in the computer 700, the operation thereof is stored in the auxiliary storage device 730 in the form of a program. The CPU 710 reads the program from the auxiliary storage device 730, develops the program in the main storage device 720, and executes the above processing according to the program.

The CPU 710 secures a storage area for the imaging apparatus 621 to perform processing in the main storage device 720 according to the program. Communication between the imaging apparatus 621 and another device is executed by the interface 740 having a communication function and operating under the control of the CPU 710. The interaction between the imaging apparatus 621 and the user is executed when the interface 740 includes an input device and an output device, information is presented to the user by the output device according to the control of the CPU 710, and a user operation is accepted by the input device.

In a case where the device 624 is implemented in the computer 700, the operation thereof is stored in the auxiliary storage device 730 in the form of a program. The CPU 710 reads the program from the auxiliary storage device 730, develops the program in the main storage device 720, and executes the above processing according to the program.

The CPU 710 secures a storage area for the device 624 to perform processing in the main storage device 720 according to the program. Communication between the device 624 and another device is executed by the interface 740 having a communication function and operating under the control of the CPU 710. The interaction between the device 624 and the user is executed when the interface 740 has an input device and an output device, information is presented to the user by the output device according to the control of the CPU 710, and a user operation is accepted by the input device.

In a case where the general-purpose imaging device 910 is implemented in the computer 700, the operation thereof is stored in the auxiliary storage device 730 in the form of a program. The CPU 710 reads the program from the auxiliary storage device 730, develops the program in the main storage device 720, and executes the above processing according to the program.

The CPU 710 secures a storage area for the general-purpose imaging device 910 to perform processing in the main storage device 720 according to the program. Communication between the general-purpose imaging device 910 and another device is executed by the interface 740 having a communication function and operating under the control of the CPU 710. The interaction between the general-purpose imaging device 910 and the user is executed when the interface 740 includes an input device and an output device, information is presented to the user by the output device according to the control of the CPU 710, and a user operation is accepted by the input device.

Any one or more of the above-described programs may be recorded in the nonvolatile recording medium 750. In this case, the interface 740 may read the program from the nonvolatile recording medium 750.
Then, the CPU 710 may directly execute the program read by the interface 740, or may temporarily store and execute the program in the main storage device 720 or the auxiliary storage device 730.

A program for executing all or part of the processing performed by the imaging apparatus 100, the imaging apparatus 100b, the imaging apparatus 610, the imaging apparatus 621, the device 624, and the general-purpose imaging device 910 may be recorded in a computer-readable recording medium, and the processing of each unit may be performed by causing a computer system to read and execute the program recorded in the recording medium. The "computer system" herein includes hardware such as an operating system (OS) and peripheral devices.

The "computer-readable recording medium" refers to a portable medium such as a flexible disk, a magneto-optical disk, a read only memory (ROM), and a compact disc read only memory (CD-ROM), and a storage device such as a hard disk built in a computer system. The program may be for achieving a part of the functions described above, and the functions described above may be achieved in combination with a program already recorded in the computer system.

Although the example embodiments have been described above, the specific configuration is not limited to the example embodiments, and includes design and the like within a range not departing from the scope of the present invention. The above-described example embodiments can be appropriately combined with other example embodiments.

Some or all of the above-described example embodiments may be described as the following supplementary notes, but are not limited to the following supplementary notes.

### (Supplementary Note 1)

An imaging apparatus including: mounting means for detachably mounting a device having a camera; and
one or more light sources capable of switching between on and off for each of the light sources, each of the light sources capable of illuminating an imaging area of the camera.

### (Supplementary Note 2)

The imaging apparatus according to Supplementary Note 1, further including
a position adjustment means for adjusting a positional relationship between the camera and the one or more light sources.

### (Supplementary Note 3)

The imaging apparatus according to Supplementary Note 2, further including
mark presentation means for presenting a mark, at a position where the mark can be included in an imaging range of the camera, for adjusting the positional relationship between the camera and the light source,
in which the position adjustment means adjusts the positional relationship between the camera and the one or more light sources according to a user operation in a state where the mark is presented.

### (Supplementary Note 4)

The imaging apparatus according to any one of Supplementary Note 1 to 3, further including
synchronization means for synchronizing a lighting pattern of the one or more light sources with imaging timing of the camera.

### (Supplementary Note 5)

The imaging apparatus according to Supplementary Note 4, further including
operation means for accepting user operation for instructing imaging,
in which the synchronization means causes the camera to capture an image for each lighting pattern of the one or more light sources in a case where the user operation for instructing the imaging is performed.

### (Supplementary Note 6)

The imaging apparatus according to Supplementary Note 4 or 5,
in which the lighting pattern of the one or more light sources includes a pattern in which all the light sources are turned off.

### (Supplementary Note 7)

The imaging apparatus according to any one of Supplementary Notes 4 to 6,
in which the lighting pattern of the one or more light sources includes a pattern in which a plurality of the light sources is simultaneously turned on.

### (Supplementary Note 8)

The imaging apparatus according to any one of Supplementary Notes 1 to 7, further including
a sensor that measures a position and an orientation of the camera.

### (Supplementary Note 9)

The imaging apparatus according to any one of Supplementary Notes 1 to 8,
in which a plurality of the light sources is provided.

### (Supplementary Note 10)

The imaging apparatus according to Supplementary Note 9,
in which three or more of the light sources are provided.

### (Supplementary Note 11)

An imaging system including:
an imaging apparatus; and
a device having a camera,
in which the imaging apparatus includes
mounting means for detachably mounting the device having the camera, and
one or more light sources that switch between on and off for each light source that is provided to be capable of illuminating an imaging area of the camera.

### (Supplementary Note 12)

The imaging system according to Supplementary Note 11,
in which the imaging apparatus further includes position adjustment means for adjusting a positional relationship between the camera and the light source.

### (Supplementary Note 13)

The imaging system according to Supplementary Note 12, in which
the imaging apparatus further includes mark presentation means for presenting a mark for adjusting the positional relationship between the camera and the light source at a position where the mark can fall within an imaging range of the camera, and
the position adjustment means adjusts the positional relationship between the camera and the light source according to a user operation in a state where the mark is presented.

### (Supplementary Note 14)

The imaging system according to any one of Supplementary Note 11 to 13,
in which the imaging apparatus further includes synchronization means for synchronizing a lighting pattern of the one or more light sources with imaging timing of the camera.

### (Supplementary Note 15)

The imaging system according to Supplementary Note 14, in which
the imaging apparatus further includes operation means for accepting user operation for instructing imaging, and
the synchronization means causes the camera to capture an image for each lighting pattern of the light source in a case where the user operation for instructing the imaging is performed.

### (Supplementary Note 16)

The imaging system according to Supplementary Note 14 or 15,
in which the lighting pattern of the light source includes a pattern in which all the light sources are turned off.

### (Supplementary Note 17)

The imaging system according to any one of Supplementary Notes 14 to 16,
in which the lighting pattern of the light source includes a pattern in which a plurality of the light sources is simultaneously turned on.

### (Supplementary Note 18)

The imaging system according to any one of Supplementary Notes 11 to 17,
in which the imaging apparatus further includes a sensor that measures a position and an orientation of the camera.

### (Supplementary Note 19)

The imaging system according to Supplementary Note 18, further including
processing means for generating data in which a shape of an imaging object is mapped on a three-dimensional coordinate space based on an image captured by the camera and a measurement result of a position and an orientation of the camera by the sensor.

### (Supplementary Note 20)

The imaging system according to any one of Supplementary Notes 11 to 18,
in which the imaging apparatus includes a plurality of the light sources.

### (Supplementary Note 21)

The imaging system according to Supplementary Note 20,
in which the imaging apparatus includes three or more of the light sources.

### (Supplementary Note 22)

An imaging method causing a computer that controls an imaging apparatus including mounting means for detachably mounting a device having a camera, and one or more light sources that switch between on and off for each light source that is provided to be capable of illuminating an imaging area of the camera, and the device having the camera, which is mounted to the imaging apparatus,
to cause the camera to capture an image in each of a plurality of lighting patterns by the one or more light sources.

### (Supplementary Note 23)

The imaging method according to Supplementary Note 22, further causing
the computer to adjust a positional relationship between the camera and the light source.

### (Supplementary Note 24)

The imaging method according to Supplementary Note 23, further causing
the computer to present a mark for adjusting a positional relationship between the camera and the light source at a position where the mark can fall within an imaging range of the camera,
in which the adjusting the positional relationship between the camera and the light source includes causing the computer to adjust the positional relationship between the camera and the light source according to a user operation in a state where the mark is presented.

### (Supplementary Note 25)

The imaging method according to any one of Supplementary Notes 22 to 24, further causing
the computer to synchronize a lighting pattern of the one or more light sources with imaging timing of the camera.

### (Supplementary Note 26)

The imaging method according to Supplementary Note 25, further causing
the computer to accept a user operation instructing imaging,
in which the synchronizing the lighting pattern of the one or more light sources with the imaging timing of the camera includes causing the computer to cause the camera to capture an image for each lighting pattern of the light source when the user operation of instructing the imaging is performed.

### (Supplementary Note 27)

The imaging method according to Supplementary Note 25 or 26,
in which the lighting pattern of the light source includes a pattern in which all the light sources are turned off.

### (Supplementary Note 28)

The imaging method according to any one of Supplementary Notes 25 to 27,
in which the lighting pattern of the light source includes a pattern in which a plurality of the light sources is simultaneously turned on.

### (Supplementary Note 29)

The imaging method according to any one of Supplementary Notes 22 to 28, further providing
a sensor that measures a position and an orientation of the camera in the imaging apparatus.

### (Supplementary Note 30)

The imaging method according to any one of Supplementary Notes 22 to 29, further providing
a plurality of the light sources in the imaging apparatus.

### (Supplementary Note 31)

The imaging method according to Supplementary Note 30, further providing
three or more of the light sources in the imaging apparatus.

### (Supplementary Note 32)

A program causing a computer that controls an imaging apparatus including mounting means for detachably mounting a device having a camera, and one or more light sources that switch between on and off for each light source that is provided to be capable of illuminating an imaging area of the camera, and the device having the camera, which is mounted to the imaging apparatus,
to execute causing the camera to capture an image in each of a plurality of lighting patterns by the one or more light sources.

### (Supplementary Note 33)

The program according to Supplementary Note 32, further causing
the computer to execute adjusting a positional relationship between the camera and the light source.

### (Supplementary Note 34)

The program according to Supplementary Note 33, further causing
the computer to execute presenting a mark for adjusting a positional relationship between the camera and the light source at a position where the mark can fall within an imaging range of the camera,
in which the adjusting the positional relationship between the camera and the light source includes causing the computer to adjust the positional relationship between the camera and the light source according to a user operation in a state where the mark is presented.

### (Supplementary Note 35)

The program according to any one of Supplementary Notes 32 to 34, further causing
the computer to execute synchronizing a lighting pattern of the one or more light sources with imaging timing of the camera.

### (Supplementary Note 36)

The program according to Supplementary Note 35, further causing
the computer to execute accepting a user operation instructing imaging,
in which the synchronizing the lighting pattern of the one or more light sources with the imaging timing of the camera, causes the computer to execute causing the camera to capture an image for each lighting pattern of the light source when the user operation of instructing the imaging is performed.

### (Supplementary Note 37)

The program according to Supplementary Note 35 or 36,
in which the lighting pattern of the light source includes a pattern in which all the light sources are turned off.

### (Supplementary Note 38)

The program according to any one of Supplementary Notes 35 to 37,
in which the lighting pattern of the light source includes a pattern in which a plurality of the light sources is simultaneously turned on.

### (Supplementary Note 39)

The program according to any one of Supplementary Notes 32 to 38,
in which the imaging apparatus includes a sensor that measures a position and an orientation of the camera.

### (Supplementary Note 40)

The program according to any one of Supplementary Notes 32 to 39,
in which the imaging apparatus includes a plurality of the light sources.

### (Supplementary Note 41)

The program according to Supplementary Note 40,
in which the imaging apparatus includes three or more of the light sources.

## Claims

1. An imaging apparatus comprising:
a mounting means for detachably mounting a device having a camera; and
one or more light sources capable of switching between on and off for each of the light sources, each of the light sources capable of illuminating an imaging area of the camera.

2. The imaging apparatus according to claim 1, further comprising
a position adjustment means for adjusting a positional relationship between the camera and the one or more light sources.

3. The imaging apparatus according to claim 2, further comprising
a mark presentation means for presenting a mark, at a position where the mark can be included in an imaging range of the camera, for adjusting the positional relationship between the camera and the light source, wherein
the position adjustment means adjusts the positional relationship between the camera and the one or more light sources according to a user operation in a state where the mark is presented.

4. The imaging apparatus according to any one of claims 1 to 3, further comprising
synchronization means for synchronizing a lighting pattern of the one or more light sources with imaging timing of the camera.

5. The imaging apparatus according to claim 4, further comprising
operation means for accepting user operation for instructing imaging,
wherein the synchronization means causes the camera to capture an image for each lighting pattern of the one or more light sources in a case where the user operation for instructing the imaging is performed.

6. The imaging apparatus according to claim 4 or 5, wherein
the lighting pattern of the one or more light sources includes a pattern in which all the light sources are turned off.

7. The imaging apparatus according to any one of claims 4 to 6, wherein
the lighting pattern of the one or more light sources includes a pattern in which a plurality of the light sources is simultaneously turned on.

8. The imaging apparatus according to any one of claims 1 to 7, further comprising:
a sensor measuring a position and an orientation of the camera.

9. The imaging apparatus according to any one of claims 1 to 8, wherein
a plurality of the light source is provided.

10. The imaging apparatus according to any one of claims 9, wherein three or more of the light sources are provided.

11. An imaging method comprising:
causing a computer that controls an imaging apparatus including a mounting means for detachably mounting a device having a camera, and one or more light sources capable of switching between on and off for each of the light sources, each of the light sources capable of illuminating an imaging area of the camera, and the device having the camera, which is mounted to the imaging apparatus,
to cause the camera to capture an image in each of a plurality of lighting patterns by the one or more light sources.

12. The imaging method according to claim 11, further comprising:
causing the computer to adjust a positional relationship between the camera and the light source.

13. The imaging method according to claim 12, further comprising
causing the computer to present a mark for adjusting a positional relationship between the camera and the light source at a position where the mark can fall within an imaging range of the camera, wherein
the adjusting the positional relationship between the camera and the light source includes causing the computer to adjust the positional relationship between the camera and the light source according to a user operation in a state where the mark is presented.

14. The imaging method according to any one of claims 11 to 14, further comprising:
causing the computer to synchronize a lighting pattern of the one or more light sources with imaging timing of the camera.

15. A program causing a computer that controls an imaging apparatus including a mounting means for detachably mounting a device having a camera, and one or more light sources capable of switching between on and off for each of the light sources, each of the light sources capable of illuminating an imaging area of the camera, and the device having the camera, which is mounted to the imaging apparatus,
to cause the camera to capture an image in each of a plurality of lighting patterns by the one or more light sources.
